# FASCICULE DE BREVET EUROPEEN

(11) **EP 4 564 744 B1**
(45) Date de publication et mention de la délivrance du brevet: **11.03.2026**
(21) Numéro de dépôt: 24215605.7
(22) Date de dépôt: 26.11.2024
(51) Int. Cl.: H04L 9/40, H04W 12/033, H04W 12/50, G01D 4/00, H04Q 9/00, H04W 88/04

(54) **PROCÉDÉ ET SYSTÈME DE COLLECTE DE DONNÉES DE CONSOMMATIONS MESURÉES PAR DES COMPTEURS INTELLIGENTS**
VERFAHREN UND SYSTEM ZUM SAMMELN VON DURCH INTELLIGENTE ZÄHLER GEMESSENEN VERBRAUCHSDATEN
METHOD AND SYSTEM FOR COLLECTING CONSUMPTION DATA MEASURED BY SMART METERS

(30) Priorité: 30.11.2023 FR 2313313
(43) Date de publication de la demande: 04.06.2025
(73) Titulaire: Sagemcom Energy & Telecom SAS, 92270 Bois-Colombes (FR)
(72) Inventeur: TEBOULLE, Henri, 92270 BOIS-COLOMBES (FR)
(74) Mandataire: Cabinet Le Guen Maillet

(56) Documents cités:
- EP-A1- 3 122 061
- EP-A1- 3 734 984
- EP-A1- 3 759 936
- FR-A1- 3 120 968
- IMTIAZ PARVEZ ET AL: "Key Management and Learning based Two Level Data Security for Metering Infrastructure of Smart Grid", ARXIV.ORG, CORNELL UNIVERSITY LIBRARY, 201 OLIN LIBRARY CORNELL UNIVERSITY ITHACA, NY 14853, 25 September 2017 (2017-09-25), XP080823285

## Description

### DOMAINE TECHNIQUE

Au moins un mode de réalisation concerne un procédé et un système de collecte de données de consommation mesurée par un compteur intelligent. Le système en question est adapté pour effectuer une collecte de telles données en provenance de plusieurs compteurs intelligents, que ce soit pour des mesures de consommation de fluide (tel que gaz, eau, chaleur, essence) ou des mesures de consommation électrique.

### ETAT DE LA TECHNIQUE ANTERIEURE

Il est connu des compteurs intelligents, de type compteurs électriques (compteurs de consommations électriques) ou compteurs de fluides (compteurs de consommation de fluides), qui comprennent des interfaces de communication permettant à un système de gestion automatisée d'effectuer une collecte à distance de données de consommation. Par exemple, des compteurs électriques intelligents comportent une interface de communication de type Courants Porteurs en Ligne CPL (ou PLC, pour « Powerline Communications » en anglais). Des données de consommation peuvent ainsi être transmises, à intervalles réguliers ou non, jusqu'à un système d'information IS (« Information system » en anglais) les traitant de manière centralisée.

Les données de consommation collectées doivent être exemptes d'erreurs pour éviter d'éventuels litiges liés à une contestation de leurs valeurs. Des erreurs peuvent provenir notamment d'une altération lors de leur transmission. En cas de litige sur la valeur d'une donnée de consommation entre un client et un fournisseur de service, une solution consiste pour le fournisseur de service à envoyer chez le client un opérateur pour effectuer une lecture directe sur un afficheur du compteur de la donnée de consommation. Une telle solution n'est pas satisfaisante dans la mesure où elle nécessite d'une part que le compteur soit équipé d'un afficheur et d'autre part que l'opérateur se déplace au domicile du client, ce qui est fastidieux et coûteux.

Il est alors souhaitable de fournir une solution qui permette de certifier que les données de consommation collectées à distance depuis un compteur intelligent par un système d'information proviennent bien dudit compteur intelligent. Il est notamment souhaitable de fournir une solution qui permette de faire aisément évoluer une infrastructure de collecte existante *(i.e.,* déjà déployée sur le terrain) tout en assurant une non-répudiation des données de consommation collectées.

A titre d'état de la technique intéressant, il est connu la demande de brevet français FR 3 120 968 A1, qui divulgue un système de gestion automatisée configuré pour effectuer une relève de données de consommation, le système de gestion automatisée comportant un système d'information et un concentrateur de données auquel le système d'information délègue la collecte des données de consommation, le système de gestion automatisée comportant en outre un réseau de communication via lequel le concentrateur de données est connecté à des compteurs intelligents.

### EXPOSE DE L'INVENTION

A cet effet, il proposé un procédé de collecte, dans un système de gestion automatisée, de premières données de consommation par un premier système d'information du système de gestion automatisée et de deuxièmes données de consommation par un deuxième système d'information du système de gestion automatisée, le système de gestion automatisée comportant en outre un concentrateur de données auquel les premier et deuxième systèmes d'information délèguent respectivement la collecte des premières et deuxièmes données de consommation, le système de gestion automatisée comportant en outre un réseau de communication via lequel le concentrateur de données est connecté à des compteurs intelligents d'un premier type, le procédé étant tel que :
- un appairage est réalisé entre chaque compteur intelligent d'un deuxième type et un dit compteur intelligent du premier type, de manière à servir de relais pour collecter des données de consommation auprès du compteur intelligent du deuxième type en question ;
- un premier lien sécurisé est établi entre chaque compteur intelligent du premier type et le premier système d'information, le premier lien sécurisé étant tel qu'un chiffrement asymétrique est mis en place pour transmettre les premières données de consommation depuis le compteur intelligent du premier type en question et le premier système d'information ;
- un deuxième lien sécurisé est établi entre chaque compteur intelligent d'un deuxième type et le deuxième système d'information, le deuxième lien sécurisé étant tel qu'un chiffrement asymétrique est mis en place pour transmettre les deuxièmes données de consommation depuis le compteur intelligent du deuxième type en question et le deuxième système d'information en utilisant le compteur intelligent du premier type appairé comme relais ;
- le concentrateur de données aiguille des données de consommation reçues au travers du réseau de communication en provenance d'un dit compteur intelligent du premier type, soit au premier système d'information, soit au deuxième système d'information, selon le lien sécurisé concerné par lesdites données reçues parmi les premier et second liens sécurisés.

Ainsi, grâce aux liens sécurisés, chaque système d'information reste maître des données de consommation issues des compteurs intelligents qui les concernent. Les systèmes d'information n'ont pas à échanger entre eux, bien que partageant une même infrastructure réseau (réseau de communication, concentrateur de données). Le chiffrement asymétrique permet d'assurer la non-répudiation des données.

Dans un mode de réalisation particulier, chaque compteur intelligent du deuxième type fonctionne sur batteries, et le compteur intelligent du premier type servant de relais pour le compteur intelligent du deuxième type en question programme des heures de sortie de veille du compteur intelligent du deuxième type en question pour obtenir les deuxièmes données de consommation à relayer via le réseau de communication. Ainsi, des données de consommation de compteurs intelligents fonctionnant sur batteries sont aisément collectées.

Dans un mode de réalisation particulier, au moins un compteur intelligent du premier type appairé fonctionne sur batteries, et le compteur intelligent du premier type en question programme ses propres heures de sortie de veille, de sorte à être sorti de veille lorsque chaque compteur intelligent du deuxième type appairé au compteur intelligent du premier type en question sort de veille. Ainsi, les batteries des compteur intelligent du premier type appairé sont préservées au mieux au regard de la collecte des données de consommation des compteurs intelligents du deuxième type.

Dans un mode de réalisation particulier, chaque compteur intelligent du deuxième type communique de manière sécurisée par chiffrement symétrique avec le compteur intelligent du premier type appairé qui lui sert de relais, le compteur intelligent du premier type en question obtenant une clef de chiffrement symétrique à utiliser avec le compteur intelligent du deuxième type en question auprès du deuxième système d'information. Ainsi, le chiffrement symétrique complète le chiffrement asymétrique pour apporter plus de sécurité.

Dans un mode de réalisation particulier, chaque compteur intelligent du deuxième type fournit au compteur intelligent du premier type appairé qui lui sert de relais une adresse d'un équipement du deuxième système d'information auprès duquel obtenir la clef de chiffrement symétrique à utiliser avec le compteur intelligent du deuxième type en question.

Dans un mode de réalisation particulier, chaque compteur intelligent du premier type communique de manière sécurisée par chiffrement symétrique avec le concentrateur de données, le concentrateur de données obtenant une clef de chiffrement symétrique à utiliser avec le compteur intelligent du premier type en question auprès du premier système d'information. Ainsi, le chiffrement symétrique complète le chiffrement asymétrique pour apporter plus de sécurité.

Il est également proposé ici un système de gestion automatisée configuré pour effectuer une collecte de premières données de consommation par un premier système d'information du système de gestion automatisée et de deuxièmes données de consommation par un deuxième système d'information du système de gestion automatisée, le système de gestion automatisée comportant en outre un concentrateur de données auquel les premier et deuxième systèmes d'information délèguent respectivement la collecte des premières et deuxièmes données de consommation, le système de gestion automatisée comportant en outre un réseau de communication via lequel le concentrateur de données est connecté à des compteurs intelligents d'un premier type. Le système de gestion automatisée est tel que chaque compteur intelligent du premier type, chaque compteur intelligent du deuxième type, le concentrateur de données, le premier système d'information et le deuxième système d'information comprennent de la circuiterie électronique configurée de telle sorte que :
- un appairage est réalisé entre chaque compteur intelligent d'un deuxième type et un dit compteur intelligent du premier type, de manière à servir de relais pour collecter des données de consommation auprès du compteur intelligent du deuxième type en question ;
- un premier lien sécurisé est établi entre chaque compteur intelligent du premier type et le premier système d'information, le premier lien sécurisé étant tel qu'un chiffrement asymétrique est mis en place pour transmettre les premières données de consommation depuis le compteur intelligent du premier type en question et le premier système d'information ;
- un deuxième lien sécurisé est établi entre chaque compteur intelligent d'un deuxième type et le deuxième système d'information, le deuxième lien sécurisé étant tel qu'un chiffrement asymétrique est mis en place pour transmettre les deuxièmes données de consommation depuis le compteur intelligent du deuxième type en question et le deuxième système d'information en utilisant le compteur intelligent du premier type appairé comme relais ;
- le concentrateur de données aiguille des données de consommation reçues au travers du réseau de communication en provenance d'un dit compteur intelligent du premier type, soit au premier système d'information, soit au deuxième système d'information, selon le lien sécurisé concerné par lesdites données reçues parmi les premier et second liens sécurisés.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1A] illustre schématiquement un système de gestion automatisée pour collecter des données de consommation ;
[Fig. 1B] illustre schématiquement un agencement d'un système d'information du système de gestion automatisée ;
[Fig. 2] illustre schématiquement un exemple d'architecture matérielle, qui est adapté pour implémenter un dispositif du système de gestion automatisée ;
[Fig. 3] illustre schématiquement des échanges intervenant dans le système de gestion automatisée pour collecter des données de consommation ;
[Fig. 4] illustre schématiquement des détails de premières opérations réalisées dans le cadre des échanges de la Fig. 3, dans un mode de réalisation particulier ;
[Fig. 5] illustre schématiquement des détails de secondes opérations réalisées dans le cadre des échanges de la Fig. 3, dans un mode de réalisation particulier ;
[Fig. 6] illustre schématiquement des détails de troisièmes opérations réalisées dans le cadre des échanges de la Fig. 3, dans un mode de réalisation particulier ;
[Fig. 7] illustre schématiquement des détails de quatrièmes opérations réalisées dans le cadre des échanges de la Fig. 3, dans un mode de réalisation particulier ; et
[Fig. 8] illustre schématiquement des détails de cinquièmes opérations réalisées dans le cadre des échanges de la Fig. 3, dans un mode de réalisation particulier.

### EXPOSE DETAILLE DE MODES DE REALISATION

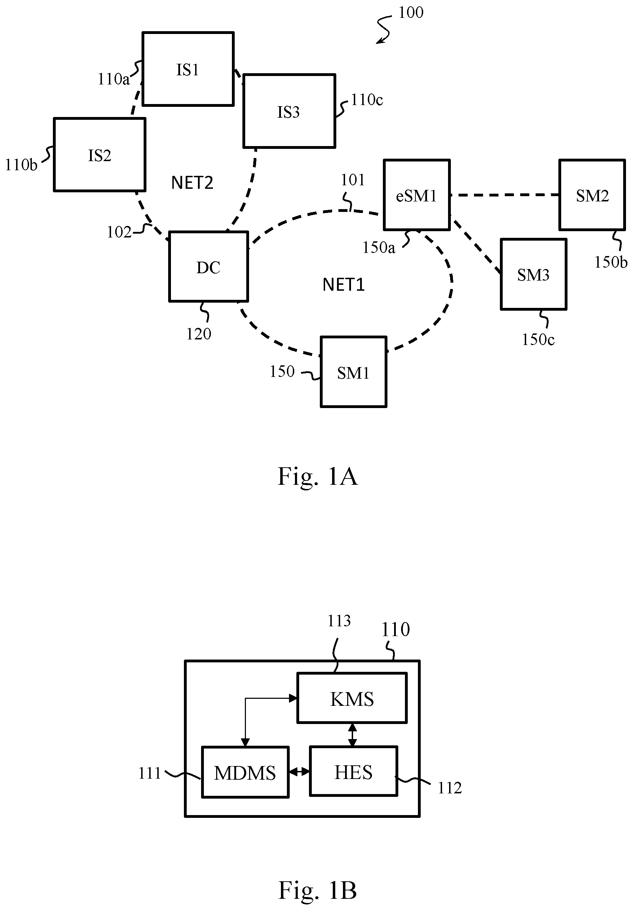

La Fig. 1A illustre schématiquement un système de gestion automatisée 100 dans lequel la présente invention peut être implémentée. Le système de gestion automatisée 100 est configuré pour réaliser une collecte de données de consommation issues de mesures effectuées par des compteurs intelligents 150, 150a, 150b, 150c.

Les données de consommation collectées sont traitées par plusieurs systèmes d'information IS (« Information system » en anglais) qui partagent une même infrastructure de collecte. Chaque système d'information est dédié à un groupe de compteurs intelligents. Par exemple, un premier système d'information IS1 110a est dédié au traitement de données de consommation d'un groupe de compteurs électriques intelligents, un deuxième système d'information IS2 110b est dédié au traitement de données de consommation d'un groupe de compteurs d'eau intelligents, et un troisième système d'information IS3 110c est dédié au traitement de données de consommation d'un groupe de compteurs de gaz intelligents. Dans un autre exemple, les systèmes d'information IS1 110a, IS2 110b et IS3 110c sont gérés par des opérateurs distincts et sont dédiés au traitement de données de consommation de groupes respectifs de compteurs de fluide (eau, gaz ou autre) intelligents qui ont souscrit des abonnements auprès de leurs opérateurs respectifs.

Les systèmes d'information IS1 110a, IS2 110b et IS3 110c délèguent la collecte des données de consommation à des concentrateurs de données DC (« Data Concentrateur » en anglais) 120, de manière à répartir la charge de collecte. Chaque concentrateur de données DC 120 gère ainsi un premier réseau de communication NET1 101 qui sert de réseau de collecte. Chaque concentrateur de données DC 120 sert ainsi de relais entre des compteurs intelligents et les systèmes d'information IS1 110a, IS2 110b et IS3 110c. Comme détaillé ci-après, chaque concentrateur de données DC 120 aiguille des données de consommation reçues au travers du premier réseau de communication NET1 101 en provenance d'un dit compteur intelligent, à l'un ou à l'autre des systèmes d'information IS1 110a, IS2 110b, selon des liens sécurisés établis dans le système de collecte 100.

Comme schématiquement illustré sur la Fig. 1A, chaque concentrateur de données DC 120 est externe aux systèmes d'information IS1 110a, IS2 110b et IS3 110c et communique avec les systèmes d'information IS1 110a, IS2 110b et IS3 110c grâce à un deuxième réseau de communication NET2 102.

Deux types de compteurs intelligents sont schématiquement illustrés sur la Fig. 1A : un premier type de compteurs intelligents, que l'on pourrait appeler « compteurs intelligents primaires » PSM (« Primary Smart Meters » en anglais), qui sont aptes à communiquer via le premier réseau de communication NET1 101 et transmettent ainsi directement leurs données de consommation au concentrateur de données DC 120 gérant le premier réseau de communication NET1 101 ; et un deuxième type de compteurs intelligents, que l'on pourrait appeler « compteurs intelligents secondaires » SSM (« Secondary Smart Meters » en anglais), qui ne sont pas aptes à communiquer via le premier réseau de communication NET1 101 et transmettent alors leurs données de consommation au concentrateur de données DC 120 gérant le premier réseau de communication NET1 101 en s'appuyant sur un dit compteur intelligent de premier type servant de relais.

Tel que schématiquement illustré sur la Fig. 1A, un dit concentrateur de données DC 120 gère la collecte de données de consommation pour le compte du système d'information IS2 110b. Les compteurs intelligents concernés par cette collecte incluent un compteur intelligent SM2 150b (qui est un compteur intelligent secondaire SSM). Ledit concentrateur de données DC 120 gère aussi la collecte de données de consommation pour le compte du système d'information IS3 110c. Les compteurs intelligents concernés par cette autre collecte incluent un compteur intelligent SM3 150c (qui est un compteur intelligent secondaire SSM). Ledit concentrateur de données DC 120 gère enfin la collecte de données de consommation pour le compte du système d'information IS1 110a. Les compteurs intelligents concernés par cette dernière collecte incluent un compteur intelligent SM1 150 et un compteur intelligent eSM1 150a (qui sont des compteurs intelligents primaires PSM). Contrairement au compteur intelligent SM1 150, le compteur intelligent eSM1 150a est un compteur intelligent amélioré (« enhanced smart meter » en anglais), qui réalise une fonction de passerelle pour le compte d'au moins un autre compteur intelligent qui dépend d'un autre système d'information IS que le système d'information IS1 110a dont dépend ledit compteur intelligent eSM1 150a. Ainsi, sur la Fig. 1A, le compteur intelligent eSM1 150a sert de relais pour le compte des compteurs intelligents SM2 150b et SM3 150c.

Par exemple, le premier réseau de communication NET1 101 est un réseau de type courants porteurs en ligne PLC (« PowerLine Communications » en anglais), tel que conforme aux spécifications G3-PLC ou PRIME. Les compteurs intelligents primaires PSM sont alors des compteurs électriques intelligents, donc potentiellement en plein fonctionnement en permanence. Selon un autre exemple, le premier réseau de communication NET1 101 est un réseau sans-fil de type LPWAN (« Low-Power Wide Area network » en anglais) tel qu'on le trouve dans l'internet des objets IoT (« Internet of Things » en anglais). Les compteurs intelligents primaires PSM peuvent alors être des compteurs à fluide (eau, gaz ou autre) intelligents, typiquement alimentés sur batteries, et donc avec un fonctionnement intermittent (périodes de veille) afin de préserver lesdites batteries.

Par exemple, le deuxième réseau de communication NET2 102 est un réseau de communication sans-fil de type 5G (5^{e} Génération). Selon d'autres exemples, le réseau de communication NET2 102 est un réseau de communication sans-fil de type GPRS (« General Packet Radio Service » en anglais), UMTS (« Universal Mobile Telecommunication System » en anglais) ou LTE (« Long-Term Evolution » en anglais).

Par exemple, chaque compteur intelligent secondaire SSM est connecté au compteur intelligent primaire PSM qui lui sert de relais grâce à un lien de communication conforme aux spécifications de télérelève M-Bus (« Meter Bus » en anglais), telles que définies dans la norme EN 13757-2, ou aux spécifications wM-Bus (« Wireless M-Bus » en anglais), telles que définies dans la norme EN 13757-4.

La Fig. 1B illustre schématiquement un agencement de système d'information IS 110 (auquel correspondent les systèmes d'information IS1 110a, IS2 110b et IS3 110c), dans un mode de réalisation particulier. Ainsi, le système d'information IS 110 comprend diverses composantes dont un système de tête de réseau HES (« Head-End System » en anglais) 112, un système de gestion de données de compteurs MDMS (« Meter Data Management System » en anglais) 111, et un système de gestion de clefs KMS (« Key Management System » en anglais) 113.

Les composantes du système d'information IS 110 communiquent par exemple en utilisant l'Internet, ou plus généralement un réseau de type IP (« Internet Protocol » en anglais), ou en utilisant potentiellement un réseau privé virtuel VPN (« Virtual Private Network » en anglais).

Le système de tête de réseau HES 112 est configuré pour effectuer la gestion de transmissions dans le cadre de la collecte de données de consommation.

Le système de gestion de données de compteurs MDMS 111 est configuré pour traiter les données de consommation collectées.

Le système de gestion de clefs KMS 113 est configuré pour stocker des clefs de chiffrement nécessaires aux compteurs intelligents qui dépendent du système d'information IS 110 en question. Le système de gestion de clefs KMS 113 fournit au système de gestion de données de compteurs MDMS 111 les clefs nécessaires aux déchiffrements que ledit système de gestion de données de compteurs MDMS 111 doit effectuer.

Ainsi, le système de gestion de clefs KMS du système d'information IS1 110a gère les clefs nécessaires aux compteurs intelligents qui dépendent du système d'information IS1 110a, le système de gestion de clefs KMS du système d'information IS2 110b gère les clefs nécessaires aux compteurs intelligents qui dépendent du système d'information IS2 110b, et le système de gestion de clefs KMS du système d'information IS3 110c gère les clefs nécessaires aux compteurs intelligents qui dépendent du système d'information IS3 110c.

Notamment, le système de gestion de clefs KMS 113 est configuré pour stocker des clefs publiques de chiffrement asymétrique. Il existe une clef publique de chiffrement asymétrique AK1 pour chaque compteur intelligent qui dépend du système d'information IS 110 en question. A chaque clef publique de chiffrement asymétrique AK1 correspond une clef privée de chiffrement asymétrique AK2, qui est détenue dans le système de gestion automatisée 100 uniquement par le compteur intelligent en question. La clef privée de chiffrement asymétrique AK2 est par exemple dérivée d'un numéro de série du compteur intelligent correspondant. La clef publique de chiffrement asymétrique AK1 est utilisée pour déchiffrer des données signées à l'aide de la clef privée de chiffrement asymétrique AK2 correspondante. Chaque paire de clef publique de chiffrement asymétrique AK1 et clef privée de chiffrement asymétrique AK2 permet d'assurer la non-répudiation des données de consommation transmises (mesurées) par le compteur intelligent en question jusqu'au système d'information IS 110 dont ledit compteur intelligent dépend.

En outre, le système de gestion de clefs KMS 113 est configuré pour stocker des clefs de chiffrement symétrique.

Il existe une première clef de chiffrement symétrique SK1 pour chaque compteur intelligent secondaire SSM, pour communiquer de manière sécurisée avec le compteur intelligent primaire PSM qui lui sert de relais. Ainsi, dans l'exemple de la Fig. 1A, le système de gestion de clefs KMS 113 du système d'information IS2 110b stocke la clef de chiffrement symétrique SK1 pour chaque compteur intelligent secondaire SSM qui dépend dudit système d'information IS2 110b, y compris le compteur intelligent SM2 150b. Et dans l'exemple de la Fig. 1A, le système de gestion de clefs KMS 113 du système d'information IS3 110c stocke la clef de chiffrement symétrique SK1 pour chaque compteur intelligent secondaire SSM qui dépend dudit système d'information IS3 110c, y compris le compteur intelligent SM3 150c. Il existe une deuxième clef de chiffrement symétrique SK2 pour chaque compteur intelligent primaire PSM pour communiquer de manière sécurisée avec le concentrateur de données DC 120. Ainsi, dans l'exemple de la Fig. 1A, le système de gestion de clefs KMS 113 du système d'information IS1 110a stocke la clef de chiffrement symétrique SK2 pour chaque compteur intelligent primaire PSM qui dépend dudit système d'information IS1 110a, y compris les compteurs intelligents SM1 150 et eSM1 150a.

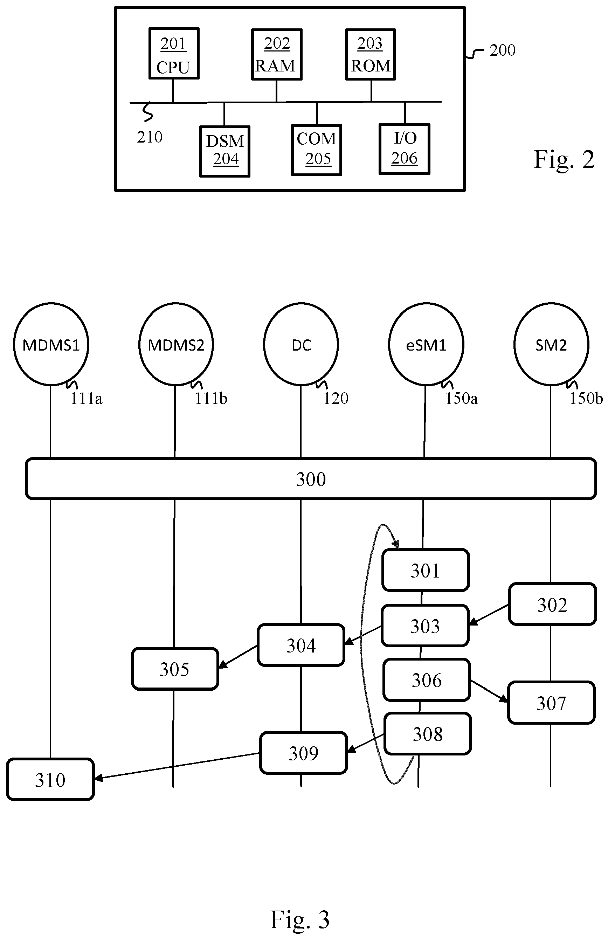

La Fig. 2 illustre schématiquement un exemple d'architecture matérielle 200, qui est adapté pour implémenter tout contrôleur de dispositif du système de gestion automatisée 100. L'exemple d'architecture matérielle est ainsi adapté pour implémenter un contrôleur de système d'information IS, ou de toute composante du système d'information IS. L'exemple d'architecture matérielle est aussi adapté pour implémenter un contrôleur de concentrateur de données DC 120. L'exemple d'architecture matérielle est aussi adapté pour implémenter un contrôleur de compteur intelligent primaire PSM. L'exemple d'architecture matérielle est aussi adapté pour implémenter un contrôleur de compteur intelligent secondaire SSM.

L'architecture matérielle 200 comprend alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203, ou EEPROM (« Electrically Erasable Programmable ROM » en anglais), ou une mémoire de type Flash ; un support de stockage de données DSM (« Data Storage Medium » en anglais) 204, tel qu'un disque dur HDD (« Hard Disk Drive » en anglais), ou un lecteur de support de stockage, tel qu'un lecteur de cartes SD (« Secure Digital » en anglais) ; et au moins une interface de communication COM 205. Selon le dispositif considéré, l'architecture matérielle 200 peut en outre comprendre des entrées/sorties (« Inputs / Outputs en anglais) I/O 206, par exemple pour effectuer des mesures de consommation.

Le processeur 201 est capable d'exécuter des instructions chargées dans la RAM 202 à partir de la ROM 203, d'une mémoire externe (non représentée), d'un support de stockage, tel qu'une carte SD, ou d'un réseau de communication. Lorsque l'architecture matérielle 200 est mise sous tension, le processeur 201 est capable de lire de la RAM 202 des instructions et de les exécuter. Ces instructions forment un programme d'ordinateur causant la mise en œuvre, par le processeur 201, des étapes et algorithmes décrits ici en relation avec le dispositif concerné.

Tout ou partie des étapes et algorithmes décrit ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) ou un ensemble de composants (« chipset » en anglais), tel qu'un FPGA (« Field-Programmable Gate Array » en anglais) ou un ASIC (« Application-Specific Integrated Circuit » en anglais). D'une manière générale, chaque dispositif du système de gestion automatisée 100 comprend de la circuiterie électronique agencée et configurée pour implémenter les étapes et algorithmes décrits ici en relation avec le dispositif en question.

La Fig. 3 illustre schématiquement des échanges intervenant dans le système de gestion automatisée 100 pour collecter des données de consommation.

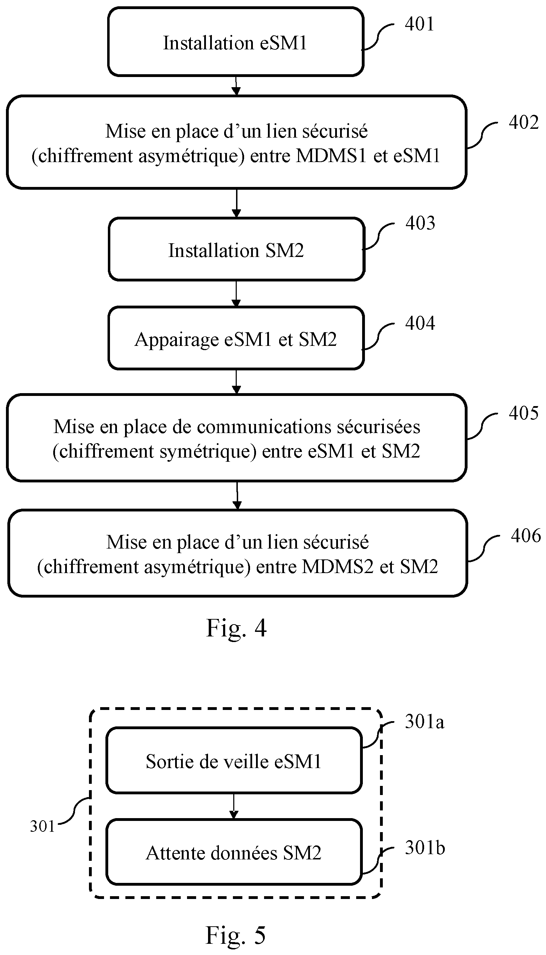

Avant de pouvoir réaliser une collecte de données de consommation auprès du compteur intelligent SM2 150b, une étape 300 de mise en place de communications sécurisées et de mise en place du relais par le compteur intelligent eSM1 150a est réalisée. Cette étape 300 est détaillée en relation avec la Fig. 4.

Ainsi, suite à une étape 401 d'installation du compteur intelligent eSM1 150a, un lien sécurisé est établi, dans une étape 402, entre le compteur intelligent eSM1 150a et le système d'information IS1 110a, et plus particulièrement le système de gestion de données de compteurs MDMS 111a (libellé MDMS1) du système d'information IS1 110a. Le système de gestion de données de compteurs MDMS1 111a récupère alors la clef publique de chiffrement asymétrique associée au compteur intelligent eSM1 150a auprès du système de gestion de clefs KMS 113 du système d'information IS1 110a. Le lien sécurisé est assuré par l'activation du chiffrement asymétrique entre le compteur intelligent eSM1 150a et le système d'information IS1 110a. Ce lien sécurisé est adapté pour assurer la non-répudiation de données fournies (mesurées) par le compteur intelligent eSM1 150a et empêcher que l'identité du compteur intelligent eSM1 150a ne soit usurpée.

Puis, suite à une étape 403 d'installation du compteur intelligent SM2 150b, un appairage est réalisé entre le compteur intelligent eSM1 150a et le compteur intelligent SM2 150b dans une étape 404. Par exemple, un appui (*e.g.,* un appui long) sur un bouton poussoir du compteur intelligent eSM1 150a et du compteur intelligent SM2 150b déclenche l'appairage. Le compteur intelligent eSM1 150a et le compteur intelligent SM2 150b se reconnaissent mutuellement, et se configurent pour que le compteur intelligent eSM1 150a assure le relais de données pour le compte du compteur intelligent SM2 150b. Une fois le compteur intelligent eSM1 150a et le compteur intelligent SM2 150b appairés, le compteur intelligent eSM1 150a synchronise temporellement le compteur intelligent SM2 150b et lui programme une heure de prochain réveil. Le compteur intelligent SM2 150b peut alors se mettre en veille.

Dans un mode de réalisation particulier, dans une étape 405, de manière à compléter l'appairage entre le compteur intelligent eSM1 150a et le compteur intelligent SM2 150b, des communications sécurisées, par chiffrement symétrique, sont mises en place entre le compteur intelligent eSM1 150a et compteur intelligent SM2 150b. Pour ce faire, le compteur intelligent eSM1 150a obtient auprès du système d'information IS2 110b la clef de chiffrement symétrique à utiliser pour communiquer de manière sécurisée avec le compteur intelligent SM2 150b. Par exemple, le compteur intelligent eSM1 150a obtient ladite clef de chiffrement symétrique auprès du système de gestion de clefs KMS 113 associé au MDMS 111b (libellé MDMS2) du système d'information IS2 110b. Le compteur intelligent eSM1 150a obtient une adresse (typiquement, une adresse IP) pour contacter un équipement du système d'information IS2 110b, typiquement le système de gestion de données de compteurs MDMS2 111b, pour se déclarer comme relais pour le compte du compteur intelligent SM2 150b et ainsi obtenir en retour du système de gestion de clefs KMS 113 la clef de chiffrement symétrique associée au compteur intelligent SM2 150b.

Et, dans une étape 406, un lien sécurisé est établi entre le compteur intelligent SM2 150b et le système d'information IS2 110b, et plus particulièrement le système de gestion de données de compteurs MDMS2 111b. Le système de gestion de données de compteurs MDMS2 111b récupère alors la clef publique de chiffrement asymétrique associée au compteur intelligent SM2 150b auprès du système de gestion de clefs KMS 113 du système d'information IS2 110b. Le lien sécurisé est assuré par l'activation du chiffrement asymétrique entre le compteur intelligent SM2 150b et le système d'information IS2 110b. Le lien sécurisé est assuré par l'activation du chiffrement asymétrique entre le compteur intelligent SM2 150b et le système d'information IS2 110b. Ce lien sécurisé est adapté pour assurer la non-répudiation de données fournies (mesurées) par le compteur intelligent SM2 150b et empêcher que l'identité du compteur intelligent SM2 150b ne soit usurpée.

Ensuite, une collecte de données de consommation auprès du compteur intelligent SM2 150b peut être réalisée, en utilisant le compteur intelligent eSM1 150a comme relais.

Ainsi, de retour à la Fig. 3, dans une étape 301, le compteur intelligent eSM1 150a se prépare à recevoir des données de consommation en provenance du compteur intelligent SM2 150b. Comme détaillé sur la Fig. 5, le compteur intelligent eSM1 150a sort de veille dans une étape 301a et se met en attente, dans une étape 301b, de données de consommation en provenance du compteur intelligent SM2 150b. Le compteur intelligent eSM1 150a sort de veille quelques instants (par exemple, 1 seconde) avant un réveil programmé du compteur intelligent SM2 150b.

A noter que, lorsque le compteur intelligent eSM1 150a est alimenté électriquement sur secteur, il n'est pas nécessaire de mettre en place de périodes de veille au niveau du compteur intelligent eSM1 150a, bien que cela permette toutefois de limiter la consommation énergétique.

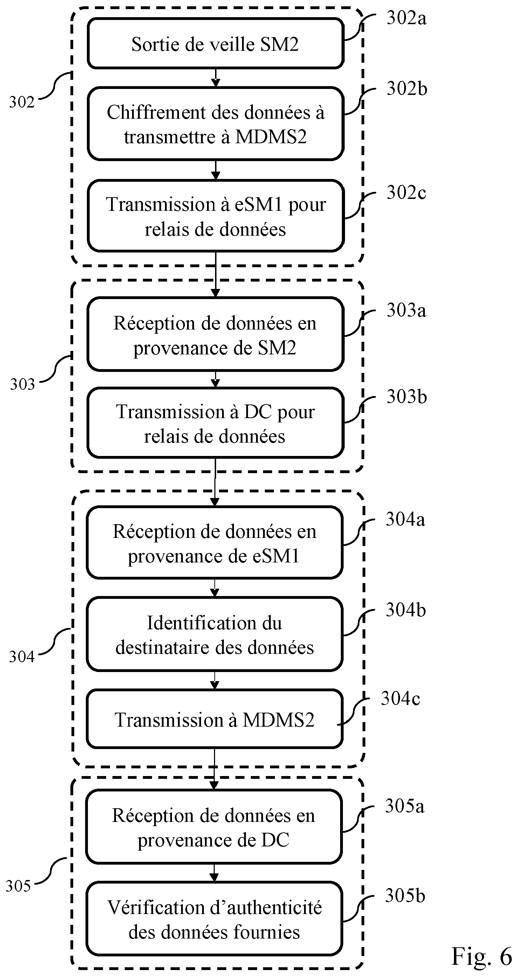

Alors, dans des étapes 302 à 305 telles que détaillées sur la Fig. 6, une remontée de données de consommation s'opère depuis le compteur intelligent SM2 150b vers le système d'information IS2 110b (préférentiellement vers le système de gestion de données de compteurs MDMS2 111b) grâce au lien sécurisé de l'étape 406, en utilisant le compteur intelligent eSM1 150a comme relais.

Ainsi, dans une étape 302, le compteur intelligent SM2 150b transmet des données de consommation au compteur intelligent eSM1 150a. Plus précisément, dans une étape 302a, le compteur intelligent SM2 150b sort de veille et obtient des données de consommation à transmettre au système d'information IS2 110b. Alors, dans une étape 302b, le compteur intelligent SM2 150b signe ses données de consommation grâce à sa clef de chiffrement asymétrique, et les transmet au compteur intelligent eSM1 150a dans une étape 302c. La transmission entre le compteur intelligent SM2 150b et le compteur intelligent eSM1 150a s'opère préférentiellement de manière sécurisée, en utilisant la clef de chiffrement symétrique associée au compteur intelligent SM2 150b *(i.e.,* le compteur intelligent SM2 150b chiffre les données avec la clef de chiffrement symétrique).

Alors, dans une étape 303, le compteur intelligent eSM1 150a effectue un relais de données à destination du système d'information IS2 110b en passant par le concentrateur de données DC 120. Ainsi, dans une étape 303a, le compteur intelligent eSM1 150a reçoit les données transmises par le compteur intelligent SM2 150b dans l'étape 302c. En cas de transmission sécurisée entre le compteur intelligent SM2 150b et le compteur intelligent eSM1 150a, le compteur intelligent eSM1 150a est capable d'effectuer un déchiffrement, grâce à la clef de chiffrement symétrique qui lui a été transmise par le système d'information IS2 110b. Et dans une étape 303b, le compteur intelligent eSM1 150a transmet les données (toujours signées grâce au chiffrement asymétrique du compteur intelligent SM2 150b) au concentrateur de données DC 120. La transmission entre le compteur intelligent eSM1 150a et le concentrateur de données DC 120 s'opère préférentiellement de manière sécurisée, en utilisant la clef de chiffrement symétrique associée au compteur intelligent eSM1 150a *(i.e.,* le compteur intelligent eSM1 150a chiffre les données avec la clef de chiffrement symétrique). Dans cette transmission, le compteur intelligent eSM1 150a indique au concentrateur de données DC 120 que le destinataire des données est le système d'information IS2 110b (préférentiellement, le système de gestion de données de compteurs MDMS2 111b). Typiquement, un champ d'adresse de destination contient l'adresse IP du système de gestion de données de compteurs MDMS2 111b.

Puis, dans une étape 304, le concentrateur de données DC 120 fait suivre les données de consommation issues du compteur intelligent SM2 150b, et relayées par le compteur intelligent eSM1 150a, au système d'information IS2 110b (préférentiellement, au système de gestion de données de compteurs MDMS2 111b). Ainsi, le concentrateur de données DC 120 aiguille les données de consommation reçues au système d'information IS2 110b, puisque ces données de consommation sont relatives à un lien sécurisé impliquant le système d'information IS2 110b. Plus précisément, dans une étape 304a, le concentrateur de données DC 120 reçoit les données transmises par le compteur intelligent eSM1 150a à l'étape 303b. Si les données ont été transmises de manière sécurisée sur le premier réseau de communication NET1 101 par le compteur intelligent eSM1 150a, le concentrateur de données DC 120 utilise la clef de chiffrement symétrique associée au compteur intelligent eSM1 150a pour déchiffrer les données reçues. Le concentrateur de données DC 120 a par exemple obtenu cette clef de chiffrement symétrique de la part du système d'information IS1 110a (plus précisément du système de gestion de clefs KMS 113), lorsque le compteur intelligent eSM1 150a s'est déclaré sur le premier réseau de communication NET1 101. Puis, dans une étape 304b, le concentrateur de données DC 120 identifie le destinataire des données reçues, à savoir ici le système d'information IS2 110b (préférentiellement, le système de gestion de données de compteurs MDMS2 111b). Et dans une étape 304c, le concentrateur de données DC 120 fait suivre les données de consommation issues du compteur intelligent SM2 150b au destinataire identifié.

Alors, dans une étape 305, le système d'information IS2 110b traite les données de consommation issues du compteur intelligent SM2 150b. Plus précisément, dans une étape 305a, le système d'information IS2 110b (préférentiellement, le système de gestion de données de compteurs MDMS2 111b) reçoit les données transmises par le concentrateur de données DC 120 à l'étape 304c. Puis, dans une étape 305b, le système d'information IS2 110b (préférentiellement, le système de gestion de données de compteurs MDMS2 111b) vérifie l'authenticité des données de consommation issues du compteur intelligent SM2 150b grâce à la clef publique de chiffrement asymétrique associée au compteur intelligent SM2 150b. Le système d'information IS2 110b peut ainsi vérifier que les données reçues proviennent effectivement, via le lien sécurisé établi entre le compteur intelligent SM2 150b et le système d'information IS2 110b, de mesures de consommation réalisées par le compteur intelligent SM2 150b en question.

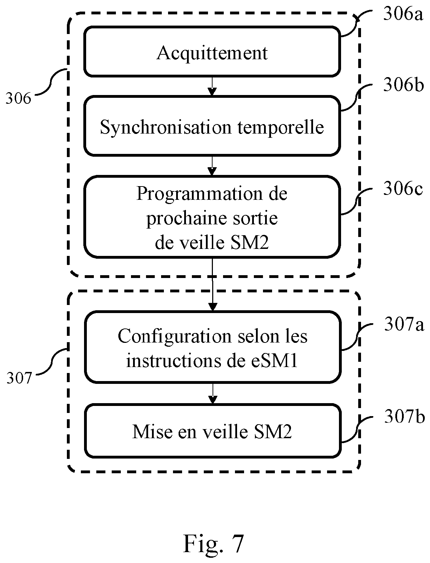

Ainsi, de retour à la Fig. 3, dans une étape 306, le compteur intelligent eSM1 150a reprogramme le compteur intelligent SM2 150b pour une relève ultérieure de données de consommation mesurée par ledit compteur intelligent SM2 150b. Plus précisément, comme détaillé sur la Fig. 7, dans une étape 306a, le compteur intelligent eSM1 150a acquitte les données transmises par le compteur intelligent SM2 150b à l'étape 302c. Puis, préférentiellement, dans une étape 306b, le compteur intelligent eSM1 150a synchronise temporellement le compteur intelligent SM2 150b, par exemple pour caler le compteur intelligent SM2 150b sur la référence du temps universel coordonné (« Coordinated Universal Time » en anglais ou UTC). Et, dans une étape 306c, le compteur intelligent eSM1 150a programme une heure de prochain réveil (sortie de veille) du compteur intelligent SM2 150b.

Alors, dans une étape 307, le compteur intelligent SM2 150b suit les instructions du compteur intelligent eSM1 150a et entame une période de veille jusqu'à une prochaine relève de données de consommation. Plus précisément, comme détaillé sur la Fig. 7, dans une étape 307a, le compteur intelligent SM2 150b se configure conformément aux instructions du compteur intelligent eSM1 150a : synchronisation temporelle et programmation de l'heure de prochain réveil. Puis, dans une étape 307b, le compteur intelligent SM2 150b se met en veille. Les batteries du compteur intelligent SM2 150b sont ainsi préservées.

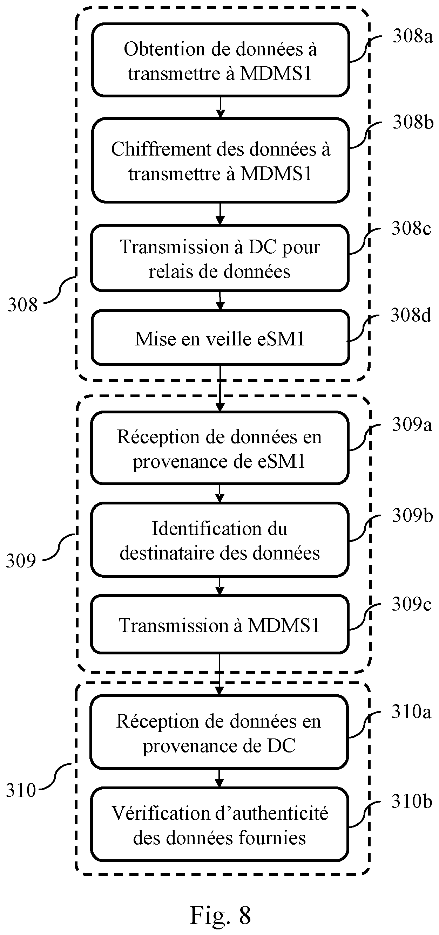

Lorsque le compteur intelligent eSM1 150a est lui-même alimenté par batteries, il est avantageux de profiter du réveil du compteur intelligent eSM1 150a pour transmettre ses propres données de consommation en sus des données de consommation du compteur intelligent SM2 150b. Ainsi, dans une étape 308, le compteur intelligent eSM1 150a transmet au concentrateur de données DC 120 des données de consommation, à destination cette fois du système d'information IS1 110a. Plus précisément, comme détaillé sur la Fig. 8, dans une étape 308a, le compteur intelligent eSM1 150a obtient des données de consommation à transmettre au système d'information IS1 110a. Alors, dans une étape 308b, le compteur intelligent eSM1 150a signe ses données de consommation grâce à sa clef de chiffrement asymétrique, et les transmet au concentrateur de données DC 120 dans une étape 308c. La transmission entre le compteur intelligent eSM1 150a et le concentrateur de données DC 120 s'opère préférentiellement de manière sécurisée, en utilisant la clef de chiffrement symétrique associée au compteur intelligent eSM1 150a *(i.e.,* le compteur intelligent eSM1 150a chiffre les données avec la clef de chiffrement symétrique). Dans un mode de réalisation particulier, pour préserver le cas échéant ses batteries, le compteur intelligent eSM1 150a programme son propre réveil à une heure de réveil antérieure à l'heure de réveil programmée du compteur intelligent SM2 150b et se met en veille dans une étape 308d.

Puis, dans une étape 309, le concentrateur de données DC 120 fait suivre les données de consommation issues du compteur intelligent eSM1 150a au système d'information IS 1 110a (préférentiellement, au système de gestion de données de compteurs MDMS 1 111a). Ainsi, le concentrateur de données DC 120 aiguille les données de consommation reçues au système d'information IS1 110a, puisque ces données de consommation sont relatives à un lien sécurisé impliquant le système d'information IS1 110a. Plus précisément, dans une étape 309a, le concentrateur de données DC 120 reçoit les données transmises par le compteur intelligent eSM1 150a à l'étape 308c. Si les données ont été transmises de manière sécurisée sur le premier réseau de communication NET1 101 par le compteur intelligent eSM1 150a, le concentrateur de données DC 120 utilise la clef de chiffrement symétrique associée au compteur intelligent eSM1 150a pour déchiffrer les données reçues. Puis, dans une étape 309b, le concentrateur de données DC 120 identifie le destinataire des données reçues, à savoir ici le système d'information IS1 110a (préférentiellement, le système de gestion de données de compteurs MDMS1 111a). Et dans une étape 309c, le concentrateur de données DC 120 fait suivre les données de consommation issues du compteur intelligent eSM1 150a au destinataire identifié.

Alors, dans une étape 310, le système d'information IS1 110a traite les données de consommation issues du compteur intelligent eSM1 150a. Plus précisément, dans une étape 310a, le système d'information IS1 110a (préférentiellement, le système de gestion de données de compteurs MDMS1 111a) reçoit les données transmises par le concentrateur de données DC 120 à l'étape 309c. Puis, dans une étape 310b, le système d'information IS1 110a (préférentiellement, le système de gestion de données de compteurs MDMS1 111a) vérifie l'authenticité des données de consommation issues du compteur intelligent eSM1 150a grâce à la clef publique de chiffrement asymétrique associée au compteur intelligent eSM1 150a. Le système d'information IS1 110a peut ainsi vérifier que les données reçues proviennent effectivement, via le lien sécurisé établi entre le compteur intelligent eSM1 150a et le système d'information IS1 110a, de mesures de consommation réalisées par le compteur intelligent eSM1 150a en question.

Il ressort de ce qui précède que, grâce au relais effectué par le compteur intelligent eSM1 150a pour le compte du compteur intelligent SM2 150b, ainsi qu'au lien sécurisé entre chaque dit compteur intelligent et le système d'information dont ledit compteur intelligent dépend, la collecte de données de consommation est réalisée de manière efficace par le biais d'une même infrastructure réseau (premier réseau de communication NET1 101) et sécurisée (non répudiation des données transmises), sans que les divers systèmes d'information (qui correspondent à des opérateurs distincts) n'aient à communiquer entre eux.

Dans un mode de réalisation particulier, les données transmises par un compteur intelligent au système d'information IS duquel ledit compteur intelligent dépend sont obtenues par chiffrement asymétrique (signature) d'un ensemble de données incluant une empreinte notée HASH calculée à partir du doublet suivant :
- un numéro de série du compteur intelligent en question ; et
- les données de consommation D issues des mesures effectuées par le compteur intelligent en question.

Pour obtenir l'empreinte, une fonction de hachage H(.) est utilisée. La fonction de hachage H(.) est une fonction particulière qui, à partir d'une donnée fournie en entrée, calcule une empreinte numérique servant à identifier rapidement la donnée initiale. Autrement dit, à un ensemble de données unique correspond une empreinte unique qui est le résultat de la fonction de hachage H(.). Dès lors, pour deux ensemble de données différents Q1 et Q2, le compteur intelligent en question génère deux empreintes S1=H(Q1) et S2=H(Q2) distinctes.

Dans un mode de réalisation, la fonction H(.) est une fonction SHA-2 (par exemple, SHA-224, SHA-256, SHA-384 ou SHA-512). Dans le cas où la fonction H(.) est de type SHA-256, l'empreinte obtenue HASH comprend 256 bits. Dans le cas où la fonction H est de type SHA-512, l'empreinte obtenue HASH comprend 512 bits. D'autres fonctions peuvent être utilisées comme fonction H(.), comme par exemple une fonction SHA-3, une fonction MD4, une fonction MD5, une fonction SHA-1, toutes bien connues dans le domaine de la cryptographie.

Dans une variante de réalisation, l'ensemble de données susmentionné est complété par des bits de bourrage afin d'obtenir un alignement sur un nombre entier d'octets adapté à la fonction de hachage H(.) à appliquer.

Une concaténation de l'empreinte obtenue avec les données de consommation D est alors incluse dans les données transmises.

Ainsi, le système d'information IS concerné peut vérifier que les données reçues sont effectivement celles transmises par le compteur intelligent en question. Après déchiffrement en utilisant la clef publique de chiffrement asymétrique associée au compteur intelligent en question, le système d'information IS (préférentiellement, le système de gestion de données de compteurs MDMS 111 concerné) génère une empreinte de référence avec les informations qu'il détient concernant le compteur intelligent en question. Plus précisément, l'empreinte de référence est générée de la même manière que l'empreinte HASH générée par ledit compteur intelligent en question, en utilisant les données de consommation D concaténées avec l'empreinte HASH et le numéro de série du compteur intelligent connu du système d'information IS. Si l'empreinte HASH et l'empreinte de référence coïncident, alors les données reçues sont effectivement des données transmises par le compteur intelligent en question.

Dans un mode de réalisation particulier, lorsque le compteur intelligent est un compteur d'eau, les données de consommation D sont :
- un index métrologique de consommation d'eau ;
- un index métrologique de flux de retour (« backflow » en anglais), *i.e.,* dans le sens inverse d'écoulement de l'alimentation en eau ;
- température maximale et température minimale d'eau pendant une période prédéterminée, *e.g.,* depuis la dernière relève.

Dans un mode de réalisation particulier, lorsque le compteur intelligent est un compteur de gaz, les données de consommation D sont :
- un index métrologique de consommation de gaz ;
- pression maximale et pression minimale de gaz pendant une période prédéterminée, e.g., depuis la dernière relève.

Dans un mode de réalisation particulier, lorsque le compteur intelligent est un compteur de chaleur, les données de consommation D sont :
- un index métrologique de consommation énergétique calculé à partir de mesures de température de fluide en entrée et de mesures de température de fluide en sortie, et de mesures de débit.

## Revendications

1. Procédé de collecte, dans un système de gestion automatisée (100), de premières données de consommation par un premier système d'information (110a) du système de gestion automatisée (100) et de deuxièmes données de consommation par un deuxième système d'information (110b) du système de gestion automatisée (100), le système de gestion automatisée (100) comportant en outre un concentrateur de données (120) auquel les premier et deuxième systèmes d'information (110a, 110b) délèguent respectivement la collecte des premières et deuxièmes données de consommation, le système de gestion automatisée (100) comportant en outre un réseau de communication (101) via lequel le concentrateur de données (120) est connecté à des compteurs intelligents d'un premier type (150, 150a), le procédé étant tel que :
- un appairage est réalisé entre chaque compteur intelligent d'un deuxième type (150b) et un dit compteur intelligent du premier type (150a), de manière à servir de relais pour collecter des données de consommation auprès du compteur intelligent du deuxième type (150b) en question ;
- un premier lien sécurisé est établi entre chaque compteur intelligent du premier type (150a) et le premier système d'information (110a), le premier lien sécurisé étant tel qu'un chiffrement asymétrique est mis en place pour transmettre les premières données de consommation depuis le compteur intelligent du premier type (150a) en question et le premier système d'information (110a) ;
- un deuxième lien sécurisé est établi entre chaque compteur intelligent d'un deuxième type (150b) et le deuxième système d'information (110b), le deuxième lien sécurisé étant tel qu'un chiffrement asymétrique est mis en place pour transmettre les deuxièmes données de consommation depuis le compteur intelligent du deuxième type (150b) en question et le deuxième système d'information (110b) en utilisant le compteur intelligent du premier type (150a) appairé comme relais ;
- le concentrateur de données aiguille des données de consommation reçues au travers du réseau de communication (101) en provenance d'un dit compteur intelligent du premier type (150, 150a), soit au premier système d'information (110a), soit au deuxième système d'information (110b), selon le lien sécurisé concerné par lesdites données reçues parmi les premier et second liens sécurisés.

2. Procédé selon la revendication 1, dans lequel chaque compteur intelligent du deuxième type (150b) fonctionne sur batteries, et le compteur intelligent du premier type (150a) qui est appairé au compteur intelligent du deuxième type (150b) en question programme des heures de sortie de veille du compteur intelligent du deuxième type (150b) en question pour obtenir les deuxièmes données de consommation à relayer via le réseau de communication (101).

3. Procédé selon la revendication 2, dans lequel au moins un compteur intelligent du premier type (150a) appairé fonctionne sur batteries, et le compteur intelligent du premier type (150a) en question programme ses propres heures de sortie de veille, de sorte à être sorti de veille lorsque chaque compteur intelligent du deuxième type (150b) appairé au compteur intelligent du premier type en question sort de veille.

4. Procédé selon l'une des revendications 1 à 3, dans lequel chaque compteur intelligent du deuxième type (150b) communique de manière sécurisée par chiffrement symétrique avec le compteur intelligent du premier type (150a) appairé qui lui sert de relais, le compteur intelligent du premier type (150a) en question obtenant une clef de chiffrement symétrique à utiliser avec le compteur intelligent du deuxième type (150b) en question auprès du deuxième système d'information (110b).

5. Procédé selon la revendication 4, dans lequel chaque compteur intelligent du deuxième type fournit au compteur intelligent du premier type (150a) appairé qui lui sert de relais une adresse d'un équipement (113) du deuxième système d'information (110b) auprès duquel obtenir la clef de chiffrement symétrique à utiliser avec le compteur intelligent du deuxième type (150b) en question.

6. Procédé selon l'une quelconque des revendications 1 à 5, dans lequel chaque compteur intelligent du premier type (150a) communique de manière sécurisée par chiffrement symétrique avec le concentrateur de données (120), le concentrateur de données (120) obtenant une clef de chiffrement symétrique à utiliser avec le compteur intelligent du premier type (150a) en question auprès du premier système d'information (110a).

7. Système de gestion automatisée (100) configuré pour effectuer une collecte de premières données de consommation par un premier système d'information (110a) du système de gestion automatisée (100) et de deuxièmes données de consommation par un deuxième système d'information (110b) du système de gestion automatisée (100), le système de gestion automatisée (100) comportant en outre un concentrateur de données (120) auquel les premier et deuxième systèmes d'information (110a, 110b) délèguent respectivement la collecte des premières et deuxièmes données de consommation, le système de gestion automatisée (100) comportant en outre un réseau de communication (101) via lequel le concentrateur de données (120) est connecté à des compteurs intelligents d'un premier type (150, 150a), le système de gestion automatisée (100) comprenant en outre des compteurs intelligents d'un deuxième type (150b), le système de gestion automatisée (100) étant tel que chaque compteur intelligent du premier type (150, 150a), chaque compteur intelligent du deuxième type (150b), le concentrateur de données (120), le premier système d'information (110a) et le deuxième système d'information (110b) comprennent de la circuiterie électronique configurée de telle sorte que :
- un appairage est réalisé entre chaque compteur intelligent du deuxième type et un dit compteur intelligent du premier type (150a), de manière à servir de relais pour collecter des données de consommation auprès du compteur intelligent du deuxième type (150b) en question ;
- un premier lien sécurisé est établi entre chaque compteur intelligent du premier type (150, 150a) et le premier système d'information (110a), le premier lien sécurisé étant tel qu'un chiffrement asymétrique est mis en place pour transmettre les premières données de consommation depuis le compteur intelligent du premier type (150a) en question et le premier système d'information (110a) ;
- un deuxième lien sécurisé est établi entre chaque compteur intelligent d'un deuxième type (150b) et le deuxième système d'information (110b), le deuxième lien sécurisé étant tel qu'un chiffrement asymétrique est mis en place pour transmettre les deuxièmes données de consommation depuis le compteur intelligent du deuxième type (150b) en question et le deuxième système d'information (110b) en utilisant le compteur intelligent du premier type (150a) appairé comme relais ;
- le concentrateur de données (120) aiguille des données de consommation reçues au travers du réseau de communication (101) en provenance d'un dit compteur intelligent du premier type (150, 150a), soit au premier système d'information (110a), soit au deuxième système d'information (110b), selon le lien sécurisé concerné par lesdites données reçues parmi les premier et second liens sécurisés.

## Patentansprüche

1. Verfahren zur Sammlung, in einem System zur automatisierten Verwaltung (100), erster Verbrauchsdaten durch ein erstes Informationssystem (110a) des Systems zur automatisierten Verwaltung (100) und zweiter Verbrauchsdaten durch ein zweites Informationssystem (110b) des Systems zur automatisierten Verwaltung (100), wobei das System zur automatisierten Verwaltung (100) ferner einen Datenkonzentrator (120) aufweist, an den das erste und zweite Informationssystem (110a, 110b) jeweils die Sammlung der ersten und zweiten Verbrauchsdaten delegieren, wobei das System zur automatisierten Verwaltung (100) ferner ein Kommunikationsnetz (101) aufweist, über das der Datenkonzentrator (120) mit intelligenten Zählern eines ersten Typs (150, 150a) verbunden ist, wobei das Verfahren so beschaffen ist, dass:
- eine Kopplung zwischen jedem intelligenten Zähler eines zweiten Typs (150b) und einem solchen intelligenten Zähler des ersten Typs (150a) hergestellt wird, um als Relais zu dienen, um Verbrauchsdaten beim betreffenden intelligenten Zähler des zweiten Typs (150b) zu sammeln;
- eine erste gesicherte Verbindung zwischen jedem intelligenten Zähler des ersten Typs (150a) und dem ersten Informationssystem (110a) hergestellt wird, wobei die erste gesicherte Verbindung so beschaffen ist, dass eine asymmetrische Verschlüsselung eingerichtet ist, um die ersten Verbrauchsdaten vom betreffenden intelligenten Zähler des ersten Typs (150a) und dem ersten Informationssystem (110a) zu übertragen;
- eine zweite gesicherte Verbindung zwischen jedem intelligenten Zähler eines zweiten Typs (150b) und dem zweiten Informationssystem (110b) hergestellt wird, wobei die zweite gesicherte Verbindung so beschaffen ist, dass eine asymmetrische Verschlüsselung eingerichtet ist, um die zweiten Verbrauchsdaten vom betreffenden intelligenten Zähler des zweiten Typs (150b) und dem zweiten Informationssystem (110b) unter Verwendung des intelligenten Zählers des ersten Typs (150a) zu übertragen, der als Relais gekoppelt ist;
- der Datenkonzentrator Verbrauchsdaten, die über das Kommunikationsnetz (101) von einem solchen intelligenten Zähler des ersten Typs (150, 150a) empfangen werden, entweder an das erste Informationssystem (110a) oder das zweite Informationssystem (110b) leitet, je nach der gesicherten Verbindung von der ersten und zweiten gesicherten Verbindung, die von den empfangenen Daten betroffen ist.

2. Verfahren nach Anspruch 1, wobei jeder intelligente Zähler des zweiten Typs (150b) batteriebetrieben ist und der intelligente Zähler des ersten Typs (150a), der mit dem betreffenden intelligenten Zähler des zweiten Typs (150b) gekoppelt ist, Zeiten des Verlassens des Standby-Modus des betreffenden intelligenten Zählers des zweiten Typs (150b) programmiert, um die zweiten Verbrauchsdaten zu erhalten, die über das Kommunikationsnetz (101) weiterzuleiten sind.

3. Verfahren nach Anspruch 2, wobei wenigstens ein gekoppelter intelligenter Zähler des ersten Typs (150a) batteriebetrieben ist und der betreffende intelligente Zähler des ersten Typs (150a) seine eigenen Zeiten des Verlassens des Standby-Modus programmiert, um den Standby-Modus verlassen zu haben, wenn jeder intelligente Zähler des zweiten Typs (150b), der mit dem betreffenden intelligenten Zähler des ersten Typs gekoppelt ist, den Standby-Modus verlässt.

4. Verfahren nach einem der Ansprüche 1 bis 3, wobei jeder intelligente Zähler des zweiten Typs (150b) durch symmetrische Verschlüsselung gesichert mit dem gekoppelten intelligenten Zähler des ersten Typs (150a) kommuniziert, der ihm als Relais dient, wobei der betreffende intelligente Zähler des ersten Typs (150a) einen Schlüssel für symmetrische Verschlüsselung, der mit dem betreffenden intelligenten Zähler des zweiten Typs (150b) zu verwenden ist, beim zweiten Informationssystem (110b) erhält.

5. Verfahren nach Anspruch 4, wobei jeder intelligente Zähler des zweiten Typs dem gekoppelten intelligenten Zähler des ersten Typs (150a), der ihm als Relais dient, eine Adresse einer Ausrüstung (113) des zweiten Informationssystems (110b) bereitstellt, bei dem der Schlüssel für symmetrische Verschlüsselung erhalten werden soll, der mit dem betreffenden intelligenten Zähler des zweiten Typs (150b) zu verwenden ist.

6. Verfahren nach einem der Ansprüche 1 bis 5, wobei jeder intelligente Zähler des ersten Typs (150a) durch symmetrische Verschlüsselung gesichert mit dem Datenkonzentrator (120) kommuniziert, wobei der Datenkonzentrator (120) einen Schlüssel für symmetrische Verschlüsselung, der mit dem betreffenden intelligenten Zähler des ersten Typs (150a) zu verwenden ist, beim ersten Informationssystem (110a) erhält.

7. System zur automatisierten Verwaltung (100), das dazu konfiguriert ist, eine Sammlung erster Verbrauchsdaten durch ein erstes Informationssystem (110a) des Systems zur automatisierten Verwaltung (100) und zweiter Verbrauchsdaten durch ein zweites Informationssystem (110b) des Systems zur automatisierten Verwaltung (100) durchzuführen, wobei das System zur automatisierten Verwaltung (100) ferner einen Datenkonzentrator (120) aufweist, an den das erste und zweite Informationssystem (110a, 110b) jeweils die Sammlung der ersten und zweiten Verbrauchsdaten delegieren, wobei das System zur automatisierten Verwaltung (100) ferner ein Kommunikationsnetz (101) aufweist, über das der Datenkonzentrator (120) mit intelligenten Zählern eines ersten Typs (150, 150a) verbunden ist, wobei das System zur automatisierten Verwaltung (100) ferner intelligente Zähler eines zweiten Typs (150b) umfasst, wobei das System zur automatisierten Verwaltung (100) so beschaffen ist, dass jeder intelligente Zähler des ersten Typs (150, 150a), jeder intelligente Zähler des zweiten Typs (150b), der Datenkonzentrator (120), das erste Informationssystem (110a) und das zweite Informationssystem (110b) eine elektronische Schaltung umfassen, die so konfiguriert ist, dass:
- eine Kopplung zwischen jedem intelligenten Zähler des zweiten Typs und einem solchen intelligenten Zähler des ersten Typs (150a) hergestellt wird, um als Relais zu dienen, um Verbrauchsdaten beim betreffenden intelligenten Zähler des zweiten Typs (150b) zu sammeln;
- eine erste gesicherte Verbindung zwischen jedem intelligenten Zähler des ersten Typs (150, 150a) und dem ersten Informationssystem (110a) hergestellt wird, wobei die erste gesicherte Verbindung so beschaffen ist, dass eine asymmetrische Verschlüsselung eingerichtet ist, um die ersten Verbrauchsdaten vom betreffenden intelligenten Zähler des ersten Typs (150a) und dem ersten Informationssystem (110a) zu übertragen;
- eine zweite gesicherte Verbindung zwischen jedem intelligenten Zähler eines zweiten Typs (150b) und dem zweiten Informationssystem (110b) hergestellt wird, wobei die zweite gesicherte Verbindung so beschaffen ist, dass eine asymmetrische Verschlüsselung eingerichtet ist, um die zweiten Verbrauchsdaten vom betreffenden intelligenten Zähler des zweiten Typs (150b) und dem zweiten Informationssystem (110b) unter Verwendung des intelligenten Zählers des ersten Typs (150a) zu übertragen, der als Relais gekoppelt ist;
- der Datenkonzentrator (120) Verbrauchsdaten, die über das Kommunikationsnetz (101) von einem solchen intelligenten Zähler des ersten Typs (150, 150a) empfangen werden, entweder an das erste Informationssystem (110a) oder das zweite Informationssystem (110b) leitet, je nach der gesicherten Verbindung von der ersten und zweiten gesicherten Verbindung, die von den empfangenen Daten betroffen ist.

## Claims

1. Method for collecting, in an automated management system (100), first consumption data by a first information system (110a) of the automated management system (100) and second consumption data by a second information system (110b) of the automated management system (100), the automated management system (100) furthermore comprising a data concentrator (120) to which the first and second information systems (110a, 110b) respectively delegate the collection of the first and second consumption data, the automated management system (100) furthermore comprising a communication network (101) via which the data concentrator (120) is connected to smart meters of a first type (150, 150a), the method being such that:
- a pairing is made between each smart meter of a second type (150b) and a said smart meter of the first type (150a), so as to serve as relays for collecting consumption data from the smart meter of the second type (150b) in question;
- a first secure link is established between each smart meter of the first type (150a) and the first information system (110a), the first secure link being such that an asymmetric encryption is established to transmit the first consumption data from the smart meter of the first type (150a) in question and the first information system (110a);
- a second secure link is established between each smart meter of a second type (150b) and the second information system (110b), the second secure link being such that an asymmetric encryption is established to transmit the second consumption data from the smart meter of the second type (150b) in question and the second information system (110b) using the smart meter of the first type (150a) paired as a relay;
- the data concentrator switches consumption data received through the communication network (101) coming from a said smart meter of the first type (150, 150a), either to the first information system (110a) or to the second information system (110b), on the secure link to which said received data relate from the first and second secure links.

2. Method according to claim 1, wherein each smart meter of the second type (150b) operates on batteries, and the smart meter of the first type (150a) which is paired with the smart meter of the second type (150b) in question programs times for the smart meter of the second type (150b) in question to wake up to obtain the second consumption data to be relayed via the communication network (101).

3. Method according to claim 2, wherein at least one smart meter of the first type (150a) paired operates on batteries, and the smart meter of the first type (150a) in question programs its own times for waking up, so as to be awakened when each smart meter of the second type (150b) paired with the smart meter of the first type in question wakes up.

4. Method according to one of claims 1 to 3, wherein each smart meter of the second type (150b) communicates in a secure manner by symmetric encryption with the smart meter of the first type (150a) paired that serves as a relay for it, the smart meter of the first type (150a) in question obtaining a symmetric encryption key to be used with the smart meter of the second type (150b) in question from the second information system (110b).

5. Method according to claim 4, wherein each smart meter of the second type provides to the smart meter of the first type (150a) paired that serves as a relay for it an address of an item of equipment (113) of the second information system (110b) from which to obtain the symmetric encryption key to be used with the smart meter of the second type (150b) in question.

6. Method according to any one of claims 1 to 5, wherein each smart meter of the first type (150a) communicates in a secure manner by symmetric encryption with the data concentrator (120), the data concentrator (120) obtaining a symmetric encryption key to be used with the smart meter of the first type (150a) in question from the first information system (110a).

7. Automated management system (100) configured to make a collection of first consumption data by a first information system (110a) of the automated management system (100) and of second consumption data by a second information system (110b) of the automated management system (100), the automated management system (100) furthermore comprising a data concentrator (120) to which the first and second information systems (110a, 110b) respectively delegate the collection of the first and second consumption data, the automated management system (100) furthermore comprising a communication network (101) via which the data concentrator (120) is connected to smart meters of a first type (150, 150a), the automated management system (100) furthermore comprising smart meters of a second type (150b),
the automated management system (100) being such that each smart meter of the first type (150, 150a), each smart meter of the second type (150b), the data concentrator (120), the first information system (110a) and the second information system (110b) comprise electronic circuitry configured so that:
- a pairing is made between each smart meter of the second type and a said smart meter of the first type (150a), so as to serve as relays for collecting consumption data from the smart meter of the second type (150b) in question;
- a first secure link is established between each smart meter of the first type (150, 150a) and the first information system (110a), the first secure link being such that an asymmetric encryption is established to transmit the first consumption data from the smart meter of the first type (150a) in question and the first information system (110a);
- a second secure link is established between each smart meter of a second type (150b) and the second information system (110b), the second secure link being such that an asymmetric encryption is established to transmit the second consumption data from the smart meter of the second type (150b) in question and the second information system (110b) using the smart meter of the first type (150a) paired as a relay;
- the data concentrator (120) switches consumption data received through the communication network (101) coming from a said smart meter of the first type (150, 150a), either to the first information system (110a) or to the second information system (110b), on the secure link to which said received data relate from the first and second secure links.
